# EUROPÄISCHE PATENTSCHRIFT

(11) **EP 0 877 677 B1**
(45) Veröffentlichungstag und Bekanntmachung des Hinweises auf die Patenterteilung: **21.11.2001**
(21) Anmeldenummer: 97901619.3
(22) Anmeldetag: 31.01.1997
(51) Int. Cl.: B60P 7/13

(54) **VORRICHTUNG ZUR VERRIEGELUNG EINES CONTAINERS AN EINEM FAHRZEUGCHASSIS**
DEVICE FOR LOCKING A CONTAINER TO A VEHICLE CHASSIS
DISPOSITIF SERVANT AU VERROUILLAGE D'UN CONTENEUR SUR UN CHASSIS DE VEHICULE

(30) Priorität: 02.02.1996 DE 19603817
(43) Veröffentlichungstag der Anmeldung: 18.11.1998
(73) Patentinhaber: IT-Consulting AG, 6330 Cham (CH)
(72) Erfinder: Schulz, Gerd, 34289 Zierenberg (CH)
(74) Vertreter: Vonnemann, Gerhard, Dr.-Ing.
(86) Internationale Anmeldenummer: EP9700413
(87) Internationale Veröffentlichungsnummer: WO9728020

(56) Entgegenhaltungen:
- EP-A- 0 301 876
- DE-A- 3 809 834
- DE-C- 4 422 405
- US-A- 3 734 442
- US-A- 4 196 673
- US-A- 4 419 034
- US-A- 4 507 032
- US-A- 5 160 224

## Beschreibung

Die Erfindung betrifft eine Vorrichtung zur Verriegelung eines Containers an einem Fahrzeugchassis, mit einem Gehäuse, das auf einer dem Container zugewandten Gehäuseseite mit einem hervorstehenden Führungsblock versehen ist, mit einem im Gehäuse gelagerten Drehzapfen, der einen im Führungsblock geführten Schaft, einen über den Führungsblock hinausragenden hammerkopfförmigen Verriegelungsabschnitt und einen dem Verriegelungsabschnitt entgegengesetzt angeordneten Betätigungsabschnitt aufweist, wobei die Verriegelung durch Drehen des Drehzapfens um einen Betätigungswinkel von etwa 90° erfolgt, wobei der Führungsblock einen Drehbegrenzungsabschnitt mit mindestens zwei in Drehrichtung wirkenden Anschlägen aufweist und wobei der Drehzapfen mindestens einen radial vorspringenden Ansatz aufweist, der die Drehung des Drehzapfens in den beiden Drehrichtungen durch jeweilige Anlage an den Anschlägen des Drehbegrenzungsabschnitts auf den Drehbereich des Betätigungswinkels zwischen einer Verriegelungsposition und einer Freigabeposition begrenzt.

Derartige Verriegelungsvorrichtungen sind bekannt. Sie können beim Umschlag vom Schiff oder von der Bahn auf ein Fahrzeug oder ein Terminal-Umschlaggerät (Van Carrier) schnell gelöst und gesichert werden. Deshalb werden Fahrzeuge für den Transport von Containern mit solchen Drehverschlüssen ausgerüstet, die unter der Bezeichnung Twist Lock bekannt sind. Zur Befestigung wird das hammerkopfförmige Oberteil des Drehzapfens in einen Eckbeschlag (Corner Casting), der an allen Ecken des Containers angebracht ist, eingeführt und um 90° verdreht. Der Eckbeschlag besitzt für diesen Zweck ein Langloch an seiner Unterseite, in dem der längliche Kopf des Drehzapfens aufgenommen wird. Durch Querstellen des Kopfes wird er verriegelt und gegen Herausgleiten gesichert. Dies ist die einfachste Form der Containersicherung auf dem Transportfahrzeug.

Nationale Richtlinien, beispielsweise der Bundesrepublik Deutschland, fordern neben der beschriebenen Verriegelung noch eine zusätzliche kraftschlüssige Sicherung gegen unbeabsichtigtes Lösen. Dafür wird bei bekannten Vorrichtungen der Drehzapfen zusätzlich mit einer Gewindeeinrichtung zum Nieder- bzw. Festspannen versehen. Zum Verriegeln und Sichern muß die Bedienungsperson zuerst den Drehzapfen in die Verriegelungsstellung bringen, wobei eine Sichtkontrolle und gegebenenfalls eine Korrektur der Drehstellung erforderlich ist. Danach muß noch die Sicherungsmutter festgeschraubt werden.

Die Bedienung einer solchen festzuschraubenden Verriegelungsvorrichtung ist zeitaufwendig und birgt eine nicht zu vernachlässigende Verletzungsgefahr für den Bediener, insbesondere beim Lösen einer verschmutzten oder korrodierten Schraubeinrichtung. Wegen des allgemein üblichen Umschlags der Container unter ständigem Zeitdruck, unter allen Witterungsbedingungen und schlechten Sichtverhältnissen bei Nacht werden die bekannten Verriegelungsvorrichtungen als nachteilig empfunden.

Aus der US-A-4 507 032 ist eine gattungsgemässe Verriegelungsvorrichtung bekannt, bei der der Führungsblock einen Drehbegrenzungsabschnitt mit zwei in Drehrichtung wirkenden Anschlägen aufweist und der Drehzapfen zwei radial vorspringende Ansätze aufweist, die die Drehung des Drehzapfens in den beiden Drehrichtungen durch jeweilige Anlage an den Anschlägen des Drehbegrenzungsabschnitts auf den Drehbereich des Betätigungswinkels von 90° zwischen einer Verriegelungsposition und einer Freigabeposition begrenzen. Aufgrund der Anschläge kann bei dieser Verriegelungsvorrichtung eine problematische Sichtkontrolle grundsätzlich entfallen. Allerdings sind die Anschläge des Drehbegrenzungsabschnitts und die Ansätze des Drehzapfens noch relativ aufwendig ausgestaltet.

Aufgabe der Erfindung ist es, eine sicher und schnell bedienbare Verriegelungsvorrichtung der eingangs genannten Art anzugeben, die einfach ausgestaltet und kostengünstig herstellbar ist.

Die Erfindung löst diese Aufagbe dadurch, daß die Anschläge von zwei gegenüberliegenden parallelen Wänden des Drehbegrenzungsabschnitts gebildet werden und daß der Ansatz des Drehzapfens einen von einer quadratischen Grundform ausgehenden Querschnitt mit abgerundeten Ecken aufweist, wobei sich zwei erste Abrundungen im wesentlichen im Abstand der parallelen Wände gegenüberliegend über einen Winkelbereich von ungefähr 90° erstrecken und die beiden verbleibenden zweiten Abrundungen einen größeren Abstand zueinander aufweisen. Diese einfache Ausgestaltung gewährleistet eine einwandfreie Funktion bei geringem Fertigungsaufwand.

In Ausgestaltung der Erfindung ist vorgesehen, daß der Drehbegrenzungsabschnitt einen rechteckigen Querschnitt aufweist und daß der größere Abstand der zweiten Abrundungen im wesentlichen gleich der größeren Weite des Drehbegrenzungsabschnitts ist. Durch diese Maßnahme kann der Raumbedarf und der Materialaufwand für die Anordnung der erfindungagemäßen Anschläge vorteilhaft gering gehalten werden.

In weiterer Ausgestaltung ist ein zum Drehen des Drehzapfens bestimmter, am Betätigungsabschnitt angelenkter und unter Federkraft in einer quer zur Drehzapfenachse ausgerichteten Ruhelage in nächster Nähe zu einer Gehäusewand gehaltener Handhebel gegen die Federkraft vom Gehäuse weg schwenkbar, um beim Drehen aus der Verriegelungsposition in die Freigabeposition oder umgekehrt eine ausreichende Handfreiheit zu gewährleisten. Durch den nahe am Gehäuse angeordneten Handhebel wird die Vorrichtung sehr kompakt, während die Schwenkbarkeit eine bequeme Bedienung bei vernachlässigbarer Verletzungsgefahr gewährleistet. Nach der Bedienung

Die Erfindung wird noch verbessert durch die Maßnahme, daß die zum Handhebel nächstliegende Gehäusewand mindestens einen Vorsprung aufweist, an dem oder denen der Handhebel in der Verriegelungsposition und/oder der Freigabeposition einrastbar ist, um ihn gegen Verdrehen zu fixieren. Diese Verdrehsicherung wird praktisch ohne einen zusätzlichen Konstruktions- und Fertigungsaufwand erzielt und sie schützt die Verriegelung des Containers absolut sicher gegen unbeabsichtigtes Lösen. Dabei können die zwei Einrastmöglichkeiten an zwei getrennt ausgebildeten Vorsprüngen vorgesehen sein oder an zwei Seiten eines einzigen Vorsprungs, der sich über den ganzen Betätigungsweg des Handhebels erstreckt. Vorzugsweise wird der oder die Vorsprünge gleich beim Gießen des Gehäuses mit eingeformt.

Zur Aktivierung oder Deaktivierung der Verdrehsicherung ist kein zusätzlicher Bedienungsschritt erforderlich. Der Handhebel wird beim Bedienen der Verriegelung ohnehin aus seiner Ruhelage entgegen der Federkraft geschwenkt, um eine ausreichende Handfreiheit zu gewinnen. Dabei erfolgt die Deaktivierung der Verdrehsicherung von selbst ohne weiteres Zutun des Bedieners. Nach dem Verdrehen in die Verriegelungs- oder die Freigabeposition läßt der Bediener den Handhebel einfach los. Aufgrund der Federkraft schnellt dieser dann in seine Ruheposition zurück und aktiviert dabei vollkommen selbsttätig die Verdrehsicherung, indem er hinter dem erfindungsgemäßen Vorsprung der Gehäusewand einrastet.

Eine weitere vorteilhafte Ausgestaltung besteht darin, daß der Drehzapfen durch Federkraft axial an den Führungsblock angedrückt gehalten ist. Bei Bewegungen des Containers relativ zum Gehäuse der Verriegelungsvorrichtung oder bei einer inkorrekten Auflage des Eckbeschlags auf der Gehäuseoberseite kann der hammerkopfförmige Verriegelungsabschnitt des federnd gehaltenen Drehzapfens die Bewegung mitmachen bzw. einen Toleranzausgleich bewirken.

Die Erfindung kann dadurch noch verbessert werden, daß der Führungsblock zusammen mit dem Drehzapfen ins Innere des Gehäuses versenkbar ist, so daß der Verriegelungsabschnitt nicht mehr aus dem Gehäuse herausragt. Diese Maßnahme ermöglicht die Anwendung der erfindungsgemäßen Verriegelung bei an sich bekannten Anordnungen mit versenkbaren Drehzapfen. Im Unterschied zur feststehenden Ausführungsform ist hier der Führungsblock separat ausgebildet und gegenüber dem Gehäuse verschiebbar angeordnet.

In einer konsequenten Weiterbildung der einfachen und sicheren Handhebelanordnung zum Gebrauch in Vorrichtungen mit absenkbaren Drehzapfen ist vorgesehen, daß der Führungsblock durch Drehen des Handhebels aus der Freigabeposition entgegen der zur Verriegelung vorgesehenen Drehrichtung in eine Absenkposition versenkbar ist. Bei dieser Ausgestaltung kann der Drehzapfen durch Drehen des Handhebels um vorzugsweise 90° in die Freigabeposition und durch weiteres Drehen um vorzugsweise nochmal 90° in die Absenkposition gebracht werden und umgekehrt.

Weitere Vorteile und Einzelheiten der Erfindung ergeben sich aus der nachfolgenden Beschreibung von Ausführungsbeispielen anhand der Zeichnungen.

Die Figuren zeigen im einzelnen:
- Fig. 1: eine Seitenansicht einer erfindungsgemäßen Verriegelungsvorrichtung in einer feststehenden Ausführungsform, in Lösestellung,
- Fig. 2: eine Draufsicht auf die Verriegelungsvorrichtung von Fig. 1,
- Fig. 3: einen Schnitt gemäß Linie A-A von Fig. 1 in vergrößerter Teildarstellung,
- Fig. 4: eine Seitenansicht einer erfindungsgemäßen Verriegelungsvorrichtung in einer versenkbaren Ausführungsform, in Absenkstellung,
- Fig. 5: eine Seitenansicht der Verriegelungsvorrichtung von Fig. 4 in Lösestellung,
- Fig. 6: eine Draufsicht auf die Verriegelungsvorrichtung von Fig. 4.

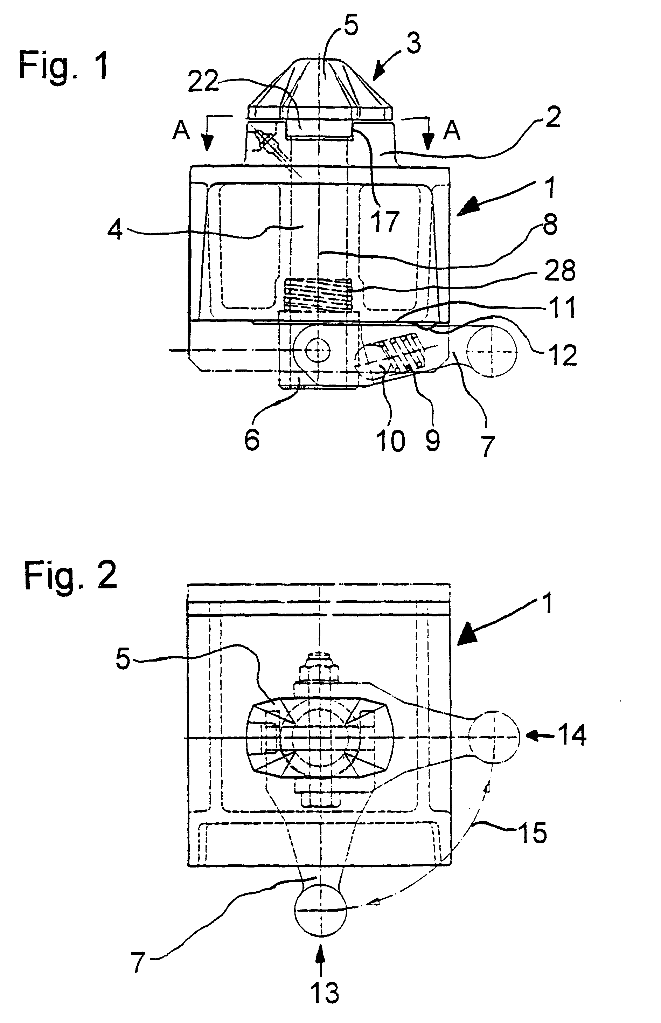

Die in Figur 1 dargestellte Verriegelungsvorrichtung hat ein Gehäuse 1, das auf seiner Oberseite einen hervorstehenden Führungsblock 2 aufweist. In dem Gehäuse 1 ist ein Drehzapfen 3 drehbar gelagert. Der Drehzapfen besitzt einen Schaft 4, der im Führungsblock 2 geführt ist. Am oberen Ende des Drehzapfens 3 geht der Schaft 4 in einen Verriegelungsabschnitt 5 über, der oben aus dem Führungsblock 2 herausragt. Am unteren Ende geht der Schaft 4 in einen Betätigungsabschnitt 6 über, der unten aus dem Gehäuse 1 herausragt.

Am Betätigungsabschnitt 6 ist ein Handhebel 7 angelenkt, der zum Drehen des Drehzapfens 3 um dessen Längsachse 8 dient. Der Handhebel 7 ist mit einer Bohrung versehen, in der eine Druckfeder 9 und eine Kugel 10 angeordnet sind. Die Federkraft drückt die Kugel 10 gegen den Betätigungsabschnitt 6 des Drehzapfens 3, wodurch der Handhebel 7 in einer waagrechten Ruhelage quer zur senkrechten Längsachse 8 des Drehzapfens 3 in Anlage an einer unteren Gehäusewand 11 des Gehäuses 1 gehalten wird. Der Handhebel 7 ist gegen die Federkraft um etwa 20° nach unten vom Gehäuse 1 weg schwenkbar, um bei der Betätigung der Verriegelungsvorrichtung eine ausreichende Handfreiheit zwischen dem Hebelgriff und der Gehäusewand 11 zu gewährleisten.

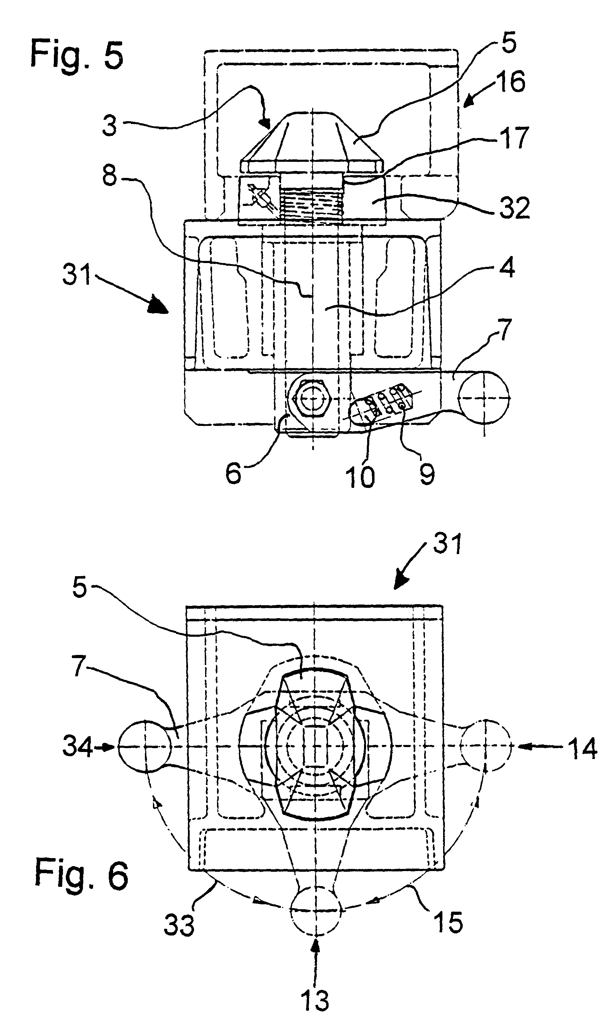

Zum Verriegeln wird der Handhebel 7 aus einer in Figur 2 gezeigten Freigabeposition 13 um einen Betätigungswinkel 15 von 90° in eine Verriegelungsposition 14 gedreht. Dabei dreht sich der Verriegelungsabschnitt 5 des Drehzapfens 3 und erzeugt mit einem in Figur 5 angedeuteten Eckbeschlag 16 eines Containers einen Formschluß, der den Container fest mit dem Fahrzeug verbindet. Zum Lösen der Verriegelung wird der Handhebel 7 in der entgegengesetzten Drehrichtung aus der Verriegelungsposition 14 in die Freigabeposition 13 gebracht.

Wie man in Figur 1 erkennt, ist an der Gehäusewand 11 ein Vorsprung 12 ausgebildet, hinter dem der Handhebel 7 in der Verriegelungsposition 14 einrastet, wenn er durch die Federkraft in seine Ruhelage gedrückt wird. Ein weiterer, nicht gezeigter Vorsprung der Gehäusewand 11 ist zum Einrasten des Handhebels 7 in der Freigabeposition 13 vorgesehen. In beiden Positionen 13,14 wird durch das Einrasten des Handhebels 7 an den dafür vorgesehenen Vorsprüngen 12 ein unbeabsichtigtes Lösen oder Verriegeln praktisch ausgeschlossen.

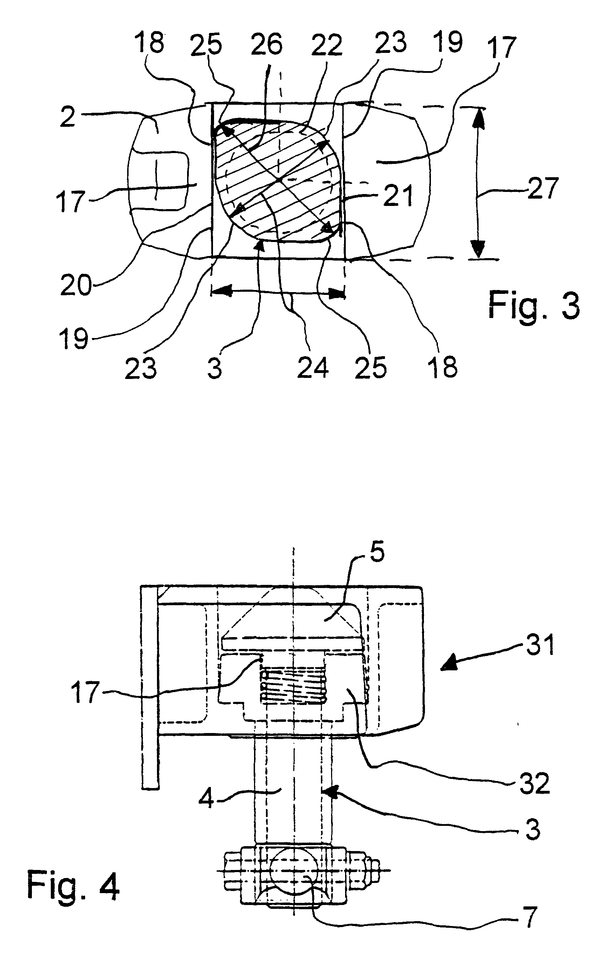

Um ein Drehen des Handhebels 7 in der einen Drehrichtung über die Verriegelungsposition 14 hinaus als auch in der anderen Drehrichtung über die Freigabeposition 13 hinaus zu verhindern, ist, wie man in Figur 3 erkennen kann, am Führungsblock 2 ein Drehbegrenzungsabschnitt 17 ausgebildet, der zwei in der einen Drehrichtung wirkenden Anschläge 18 und zwei in der anderen Drehrichtung wirkenden Anschläge 19 aufweist, die auf einfache Weise von zwei gegenüberliegend parallel angeordneten Wänden 20,21 gebildet werden.

Der Drehzapfen 3 besitzt als Gegenstück einen radial vorspringenden Ansatz 22, dessen Querschnitt man sich aus einer quadratischen Grundform hervorgehend vorstellen kann, an der dann die Ecken abgerundet werden. Dabei entstehen zwei erste Abrundungen 23, die im wesentlichen im Abstand 24 der beiden parallelen Wände 20,21 gegenüberliegen und einen Winkelbereich von 90° überspannen, und zwei weitere Abrundungen 25, die in einem größeren gegenseitigen Abstand 26 gegenüberliegen, der im wesentlichen gleich der größeren Weite 27 des rechteckigen Drehbegrenzungsabschnitts 17 ist. Die Abrundungen 23,25 gehen jeweils in eine von insgesamt vier geraden Anlageflächen über, die zur Anlage an den Anschlägen 18,19 bestimmt sind.

Durch die Anlage der genannten Anlageflächen des Ansatzes 22 an den Anschlägen 18 oder 19 des Drehbegrenzungsabschnitts 17 wird die Drehung des Drehzapfens 3 in den beiden Drehrichtungen auf den Bereich des Betätigungswinkels 15 begrenzt.

Durch die Federkraft einer zweiten Feder 28 wird der Drehzapfen 3 an den Führungsblock 2 angedrückt, um Lagetoleranzen und Bewegungen des Eckbeschlags 16 auszugleichen.

In einer in den Figuren 4 bis 6 dargestellten Ausführungsform der Erfindung ist in einem modifizierten Gehäuse 31 ein modifizierter Führungsblock 32 zusammen mit dem Drehzapfen 3 versenkbar angeordnet, so daß der Verriegelungsabschnitt 5 nicht mehr über die Oberseite des Gehäuses 31 hinausragt (Fig. 4). Das Absenken des Führungsblocks 32 geschieht durch Drehen des Handhebels 7 aus der Freigabeposition 13 entgegen der zur Verriegelung vorgesehenen Drehrichtung um einen Drehwinkel 33 von 90° in eine Absenkposition 34.

### Bezugszeichenliste

- 1: Gehäuse
- 2: Führungsblock
- 3: Drehzapfen
- 4: Schaft
- 5: Verriegelungsabschnitt
- 6: Betätigungsabschnitt
- 7: Handhebel
- 8: Längsachse
- 9: Druckfeder
- 10: Kugel
- 11: Gehäusewand
- 12: Vorsprung
- 13: Freigabeposition
- 14: Verriegelungsposition
- 15: Betätigungswinkel
- 16: Eckbeschlag
- 17: Drehbegrenzungsabschnitt
- 18: Anschläge
- 19: Anschläge
- 20: Wand
- 21: Wand
- 22: Ansatz
- 23: Abrundungen
- 24: Abstand
- 25: Abrundungen
- 26: Abstand
- 27: Weite
- 28: Feder
- 31: Gehäuse
- 32: Führungsblock
- 33: Drehwinkel
- 34: Absenkposition

## Patentansprüche

1. Vorrichtung zur Verriegelung eines Containers an einem Fahrzeugchassis, mit einem Gehäuse (1,31), das auf einer dem Container zugewandten Gehäuseseite mit einem hervorstehenden Führungsblock (2,32) versehen ist, mit einem im Gehäuse (1,31) gelagerten Drehzapfen (3), der einen im Führungsblock (2,32) geführten Schaft (4), einen über den Führungsblock (2,32) hinausragenden hammerkopfförmigen Verriegelungsabschnitt (5) und einen dem Verriegelungsabschnitt (5) entgegengesetzt angeordneten Betätigungsabschnitt (6) aufweist, wobei die Verriegelung durch Drehen des Drehzapfens (3) um einen Betätigungswinkel (15) von etwa 90° erfolgt, wobei der Führungsblock (2,32) einen Drehbegrenzungsabschnitt (17) mit mindestens zwei in Drehrichtung wirkenden Anschlägen (18,19) aufweist und wobei der Drehzapfen (3) mindestens einen radial vorspringenden Ansatz (22) aufweist, der die Drehung des Drehzapfens (3) in den beiden Drehrichtungen durch jeweilige Anlage an den Anschlägen (18,19) des Drehbegrenzungsabschnitts (17) auf den Drehbereich des Betätigungswinkels (15) zwischen einer Verriegelungsposition (14) und einer Freigabeposition (13) begrenzt, **dadurch gekennzeichnet, daß** die Anschläge (18,19) von zwei gegenüberliegenden parallelen Wänden (20,21) des Drehbegrenzungsabschnitts (17) gebildet werden und daß der Ansatz (22) des Drehzapfens (3) einen von einer quadratischen Grundform ausgehenden Querschnitt mit abgerundeten Ecken aufweist, wobei sich zwei erste Abrundungen (23) im wesentlichen im Abstand (24) der parallelen Wände (20,21) gegenüberliegend über einen Winkelbereich von ungefähr 90° erstrecken und die beiden verbleibenden zweiten Abrundungen (25) einen größeren Abstand (26) zueinander aufweisen.

2. Vorrichtung nach Anspruch 1, **dadurch gekennzeichnet, daß** der Drehbegrenzungsabschnitt (17) einen rechteckigen Querschnitt aufweist und daß der größere Abstand (26) der zweiten Abrundungen (25) im wesentlichen gleich der größeren Weite (27) des Drehbegrenzungsabschnitts (17) ist.

3. Vorrichtung nach Anspruch 1 oder 2, **dadurch gekennzeichnet, daß** ein zum Drehen des Drehzapfens (3) bestimmter, am Betätigungsabschnitt (6) angelenkter und unter Federkraft in einer quer zur Drehzapfenachse (8) ausgerichteten Ruhelage in nächster Nähe zu einer Gehäusewand (11) gehaltener Handhebel (7) gegen die Federkraft vom Gehäuse (1,31) weg schwenkbar ist, um beim Drehen aus der Verriegelungsposition (14) in die Freigabeposition (13) oder umgekehrt eine ausreichende Handfreiheit zu gewährleisten.

4. Vorrichtung nach Anspruch 3, **dadurch gekennzeichnet, daß** die zum Handhebel (7) nächstliegende Gehäusewand (11) mindestens einen Vorsprung (12) aufweist, an dem oder denen der Handhebel (7) in der Verriegelungsposition (14) und/oder der Freigabeposition (13) einrastbar ist, um ihn gegen Verdrehen zu fixieren.

5. Vorrichtung nach einem der Ansprüche 1 bis 4, **dadurch gekennzeichnet, daß** der Drehzapfen (3) durch Federkraft axial an den Führungsblock (2,32) angedrückt gehalten ist.

6. Vorrichtung nach einem der Ansprüche 1 bis 5, **dadurch gekennzeichnet, daß** der Führungsblock (32) zusammen mit dem Drehzapfen (3) ins Innere des Gehäuses (31) versenkbar ist, so daß der Verriegelungsabschnitt (5) nicht mehr aus dem Gehäuse (31) herausragt.

7. Vorrichtung nach Anspruch 6, **dadurch gekennzeichnet, daß** der Führungsblock (32) durch Drehen des Handhebels (7) aus der Freigabeposition (13) entgegen der zur Verriegelung vorgesehenen Drehrichtung in eine Absenkposition (34) versenkbar ist.

## Claims

1. Apparatus for locking a container on a vehicle chassis, having a housing (1, 31), which at a housing side directed towards the container is provided with a protruding guide block (2, 32), having a pivot (3), which is supported in the housing (1, 31) and comprises a shank (4) guided in the guide block (2, 32), a hammer-head-shaped locking portion (5) projecting beyond the guide block (2, 32) and an actuating portion (6) disposed in the opposite direction to the locking portion (5), wherein the locking is effected by rotating the pivot (3) through an actuating angle (15) of approximately 90°, wherein the guide block (2, 32) comprises a rotation-limiting portion (17) with at least two stops (18, 19) acting in direction of rotation and wherein the pivot (3) comprises at least one radially projecting lug (22), which limits the rotation of the pivot (3) in the two directions of rotation through respective abutment with the stops (18, 19) of the rotation-limiting portion (17) to the turning range of the actuating angle (15) between a locking position (14) and a release position (13), **characterized in that** the stops (18, 19) are formed by two opposing parallel walls (20, 21) of the rotation-limiting portion (17) and that the lug (22) of the pivot (3) has a cross section based on a square basic shape and having rounded-off corners, wherein two first rounded-off portions (23) extend opposite one another substantially at the distance (24) of the parallel walls (20, 21) over an angular range of approximately 90° and the two remaining second rounded-off portions (25) are at a greater distance (26) from one another.

2. Apparatus according to claim 1, **characterized in that** the rotation-limiting portion (17) has a rectangular cross section and that the greater distance (26) between the two rounded-off portions (25) is substantially equal to the greater width (27) of the rotation-limiting portion (17).

3. Apparatus according to claim 1 or 2, **characterized in that** a hand lever (7), which is intended for rotating the pivot (3) and is coupled to the actuating portion (6) and held under spring action in a position of rest aligned at right angles to the pivot axis (8) and in the immediate vicinity of a housing wall (11), is capable of swivelling counter to the spring action away from the housing (1, 31) in order, during the rotation out of the locking position (14) into the release position (13) or vice versa, to guarantee adequate hand freedom.

4. Apparatus according to claim 3, **characterized in that** the housing wall (11) nearest the hand lever (7) has at least one projection (12), at which the hand lever (7) is latchable in the locking position (14) and/or release position (13) so as to be fixed against rotation.

5. Apparatus according to one of claims 1 to 4, **characterized in that** the pivot (3) is held pressed axially against the guide block (2, 32) by spring action.

6. Apparatus according to one of claims 1 to 5, **characterized in that** the guide block (32) together with the pivot (3) is retractable into the interior of the housing (31) so that the locking portion (5) no longer projects from the housing (31).

7. Apparatus according to claim 6, **characterized in that** the guide block (32) is retractable by rotating the hand lever (7) out of the release position (13) counter to the direction of rotation provided for locking into a lowering position (34).

## Revendications

1. Dispositif de verrouillage d'un conteneur sur un châssis de véhicule comprenant :
- un boîtier (1, 31) muni sur son côté tourné vers le conteneur, d'un bloc de guidage (2, 32), en saillie,
- un pivot (3) monté dans le boîtier (1, 31), ce pivot ayant un corps (4) guidé dans le bloc de guidage (2, 32), un segment de verrouillage (5) en forme de tête de marteau, dépassant du bloc de guidage (2, 32) et un segment d'actionnement (6), à l'opposé du segment de verrouillage (5),
le verrouillage se faisant par rotation du pivot (3) suivant un angle d'actionnement (15) d'environ 90°,
le bloc de guidage (2, 32) ayant un segment de limitation de rotation (17) avec au moins deux butées (18, 19) agissant dans le sens de rotation et
le pivot (3) comporte au moins un épaulement (22) radialement en saillie, qui limite la rotation du pivot (3) dans les deux sens de rotation par un appui respectif contre les butées (18, 19) du segment de limitation de rotation (17), à la plage de rotation de l'angle d'actionnement (15), entre une position de verrouillage (14) et une position de libération (13),
**caractérisé en ce que**
des butées (18, 19) sont formées par deux parois parallèles (20, 21) opposées du segment de limitation de rotation (17),
et l'épaulement (22) du pivot (3) possède une section ayant une forme de base quadratique, avec des coins arrondis,
deux premiers arrondis (23) s'étendent essentiellement à une distance (24) des parois parallèles (20, 21), en regard, dans une plage angulaire d'environ 90° et les deux seconds autres arrondis (25) sont écartés d'une plus grande distance (26).

2. Dispositif selon la revendication 1,
**caractérisé en ce que**
le segment de limitation de rotation (17) correspond à une section rectangulaire et
la plus grande distance (26) des seconds arrondis (25) est essentiellement égale à la plus grande distance (27) du segment de limitation de rotation (17).

3. Dispositif selon la revendication 1 ou 2,
**caractérisé par**
un levier à main (7), destiné à tourner le pivot (3) articulé sur le segment d'actionnement (6) et tenu par la force d'un ressort dans une position de repos alignée transversalement par rapport à l'axe (8) du pivot, à proximité d'une paroi de boîtier (11), peut être écarté du boîtier (1, 31) contre la force d'un ressort pour disposer d'un dégagement suffisant pour la main lors de la rotation à partir de la position de verrouillage (14) dans la position de libération (13) ou inversement.

4. Dispositif selon la revendication 3,
**caractérisé en ce que**
la paroi de boîtier (11) la plus proche du levier à main (7) comporte au moins une saillie (12) contre la (ou lesquelles) le levier (7) peut s'accrocher en position de verrouillage (14) et/ou en position de libération (13) pour être bloqué en rotation.

5. Dispositif selon l'une quelconque des revendications 1 à 4,
**caractérisé en ce que**
le pivot (3) est maintenu appliqué par la force d'un ressort, axialement contre le bloc de guidage (2, 32).

6. Dispositif selon l'une quelconque des revendications 1 à 5,
**caractérisé en ce que**
le bloc de guidage (32) ainsi que le pivot (3) peut être enfoncé à l'intérieur du boîtier (31) pour que le segment de verrouillage (5) ne dépasse plus du boîtier (31).

7. Dispositif selon la revendication 6,
**caractérisé en ce que**
le bloc de guidage (32) peut être enfoncé en position abaissée (34) par rotation du levier à main (7) à partir de la position de libération (31) contre le sens de rotation correspondant au verrouillage.
